# EUROPEAN PATENT SPECIFICATION

(11) **EP 1 569 410 B1**
(45) Date of publication and mention of the grant of the patent: **08.07.2015**
(21) Application number: 04251091.7
(22) Date of filing: 26.02.2004
(51) Int. Cl.: H04W 8/22, H04L 29/06

(54) **Method and system for automatically configuring access control**
Verfahren und System zur automatischen Konfiguration von Zugangskontrolle
Procédé et système pour configurer automatiquement le contrôle d'accès

(43) Date of publication of application: 31.08.2005
(73) Proprietor: BlackBerry Limited, Waterloo, ON N2K 0A7 (CA)
(72) Inventor: Owen, Russell, Waterloo Ontario, N2K 4B8 (CA); Adams, Neil, Waterloo Ontario, N2K 4E4 (CA); Tyhurst, Tim, Kitchener Ontario, N2M 2W5 (CA)
(74) Representative: Finnie, Peter John

(56) References cited:
- WO-A-01/33889
- WO-A-99/57866
- WO-A-03/088699
- WO-A2-01/67286

## Description

### FIELD OF THE INVENTION

The present invention relates to access control points in a communications network and, in particular, to automatically configuring access control points based upon the needs of an application.

### BACKGROUND OF THE INVENTION

Many of the mobile devices available today provide complex functionality far beyond simple voice communications. For example, many devices enable a user to access remote servers or sites over a public network, like the Internet. These devices may be web-enabled and may operate browser software to permit users to access remote web sites on the mobile device. Other devices allow users to operate applications and even install new applications downloaded from remote sites over the public network.

This greater level of functionality, especially the access to the public network, presents particular security issues. For example, access to the public network renders the mobile device vulnerable to viruses, Trojan horses, and other damaging communications from remote sites. Accordingly, most mobile communications systems include one or more access control points, or firewalls, that may block certain communications or transmissions from remote sites to the mobile devices. The access control points make decisions regarding which communications to allow and which to block based upon access rules.

The use of access control points presents a problem for legitimate applications installed and operating on a mobile device because the application may require access to network resources through the public network. Communications from these resources may be blocked entirely by the access control points or the user may be asked whether access should be granted. Many users will deny access to these communications since they are unaware that the application requires them and are unfamiliar with the source of the communications.
This problem is especially acute in the case of provisioning of an application by an administrator. When an application is pushed out to a mobile device for installation, the user may be unaware it has been installed and will be unlikely to agree to receive communications from remote network resources to enable the application to operate properly.

WO01/3388 discloses a security system for a cellular data network. The security system applies filter rules to cellular data traffic to eliminate undesired or duplicate data. The rules may be defined by mobile cellular equipment users, by cellular service providers, by an automated cellular data monitoring system, by a filter rule subscription or distribution service, or by any other method of creating filter rules usable to identify undesired or duplicate data. The rules may be automatically propagated through a network, including within or between cellular data networks, mobile cellular equipment, and external network equipment. The rules may be operationally received from a distribution source, or received automatically but requiring user approval for utilization.

WO99/57866A discloses a method of implementing dynamically changing firewall rules to allow the redirection, blocking, or transmission of specific data traffic for specific users. The reference describes a system wherein an authentication server maintains a database associating particular rules with particular individual user ID's. When a user logs-on using his or her user ID, the authentication server sends the associated filter rules to a re-direction server. The redirection server then applies the filter rules for all traffic related to the particular user ID.

WO03/088699 discloses a method for remotely managing a wireless device over a telecommunications network comprising a server and the wireless device. The method comprises the steps of establishing a communicative connection between the server and the wireless device over a packet radio channel of the telecommunications network, transmitting a command from the server to the wireless device over the packet radio channel, and executing the command at the wireless device.

WO 01/67286 A2 discloses a method and software application with a framework for customizable graphical user interfaces is disclosed. The framework is configured to simplify the task of generating application-specific, user-specific, and location-specific graphical user interfaces. The framework may be configured for execution on a specialized Internet appliance, or on a generic personal computer, or a network browser. Upon power-up or user login, the software application is configured to access a set of configuration information. The configuration information may be locked or protected to prevent user access, and may be stored locally or on a server. The application is configured to use the configuration information to generate a user interface that may have one or more of the following features: customizable icons and links, plug-ins, and persistent portals.; The configuration file may include position information, size information, and linking information for one or more graphics files that are usable to generate the icons and other user interface features. The configuration file may be automatically updated from a remote server based on a predetermined update schedule and based on when the appliance is in an idle state. The updates may be generated based on historical execution data conveyed by the application to the remote server.

None of the references, WO01/33889 WO99/57866A, WO 01/67286 or WO03/088699, however, addresses the problem associated with installing a new application on a user device where the new application requires access to an external server contrary to existing access control rules.

In a first aspect, the present invention provides a method of automatically configuring a server access control point, according to claim 1.

In a second aspect, the present invention provides a computer program product having a computer-readable medium, according to claim 6.

In a third aspect, the present invention provides an access control system for automatically configuring a server access control point, according to claim 9.

In a fourth aspect, the invention provides a user device according to claim 10.

Other aspects and features of the present invention will be apparent to those of ordinary skill in the art from a review of the following detailed description when considered in conjunction with the drawings.

### BRIEF DESCRIPTION OF THE DRAWINGS

Reference will now be made, by way of example, to the accompanying drawings which show an embodiment of the present invention, and in which:
Figure 1 shows an embodiment of a mobile device communications system in block diagram form;
Figure 2 shows another embodiment of a mobile device communications system in block diagram form;
Figure 3 shows, in flowchart form, a method for automatically configuring access control for the mobile device communications system; and
Figure 4 shows, in flowchart form, another method for automatically configuring access control for the mobile device communications system.

Similar reference numerals are used in different figures to denote similar components.

### DESCRIPTION OF SPECIFIC EMBODIMENTS

The following description of one or more specific embodiments of the invention does not limit the implementation of the invention to any particular computer programming language or system architecture. The present invention is not limited to any particular operating system, network configuration, user device architecture, or computer programming language.

Some of the embodiments described below involve a user device architecture in which a plurality of mobile devices connect to a wireless connector system through a wireless network. The wireless connector system is connected, directly or indirectly, to the Internet and allows the mobile devices to send and receive communications over the Internet. It will be appreciated that aspects of the present invention need not be based upon such an architecture and that the present invention is not limited to mobile devices or wireless communications. The present invention may be embodied within wired or wireless network architectures using a variety of user devices, including mobile devices, handheld devices, personal computers, and other user terminals.

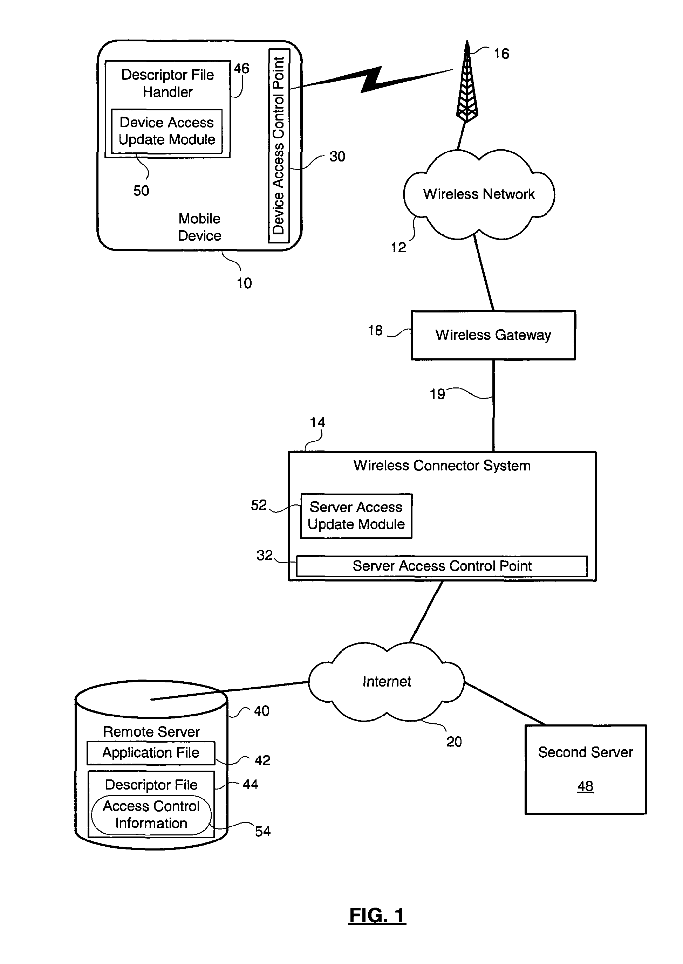

Reference is first made to Figure 1, which shows a block diagram of an embodiment of a mobile device communications system 8. The system 8 includes a mobile device 10, a wireless network 12, and a wireless connector system 14. The mobile device 10 sends and receives wireless communication, including data and possibly also voice communication. Depending on the functionality provided by the device, in various embodiments the device may be a data communication device, a multiple-mode communication device configured for both data and voice communication, a mobile telephone, a PDA (personal digital assistant) enabled for wireless communication, or a computer system with a wireless modem, among other things.

The mobile device 10 sends and receives wireless communications with an antenna 16 coupled to the wireless network 12. The wireless network 12 includes a number of antennas 16 distributed in various locations for sending and receiving wireless communications with the mobile device 10.

In one embodiment, the wireless network 12 is coupled to a wireless gateway 18 or relay. The wireless gateway 18 interfaces between a plurality of wireless connector systems, including a wireless connector system 14, and a plurality of mobile devices, including the mobile device 10. The wireless gateway 18 routes data packets between the various wireless connector systems and their associated mobile devices over the wireless network 12. Accordingly, communications sent via the mobile device 10 are received by the antenna 16 and transported via the wireless network 12 to the wireless gateway 18. The wireless gateway 18 forwards the communication to the wireless connector system 14. Communications sent from the wireless connector system 14 are received by the wireless gateway 18 and transported via the wireless network 12 to the mobile device 10.

The wireless connector system 14 is coupled to a wireless gateway 18 for receiving and sending communications with the mobile device 10. In one embodiment, the wireless gateway 18 and the wireless connector system 14 are connected via a dedicated link 19. Typically, the wireless connector system 14 is dedicated to managing communications to and from a set of mobile devices 10. The wireless connector system 14 may include a corporate Intranet and multiple servers, including an e-mail server and an Internet server.

The wireless connector system 14 is also connected to a public network, which in some embodiments is the Internet 20. Therefore, data communications, such as e-mail messages, may be received by the wireless connector system 14 through the Internet 20 from remote locations and may be redirected from the wireless connector system 14 to the mobile device 10. In this regard the wireless connector system 14 may comprise an electronic mail server such as, for example, a server running Microsoft^{™} Exchange Server or other commercially available mail server software.

The wireless connector system 14 also allows the mobile device 10 to send and receive communications other than e-mail over the Internet 20. For example, the mobile device 10 may operate web browser software for receiving HTML pages from remote web sites over the Internet 20. The mobile device 10 may also operate applications that send and receive data with remote sites over the Internet. For example, the mobile device 10 may operate an application that consumes a Web Service to monitor stock prices or other on-line content.

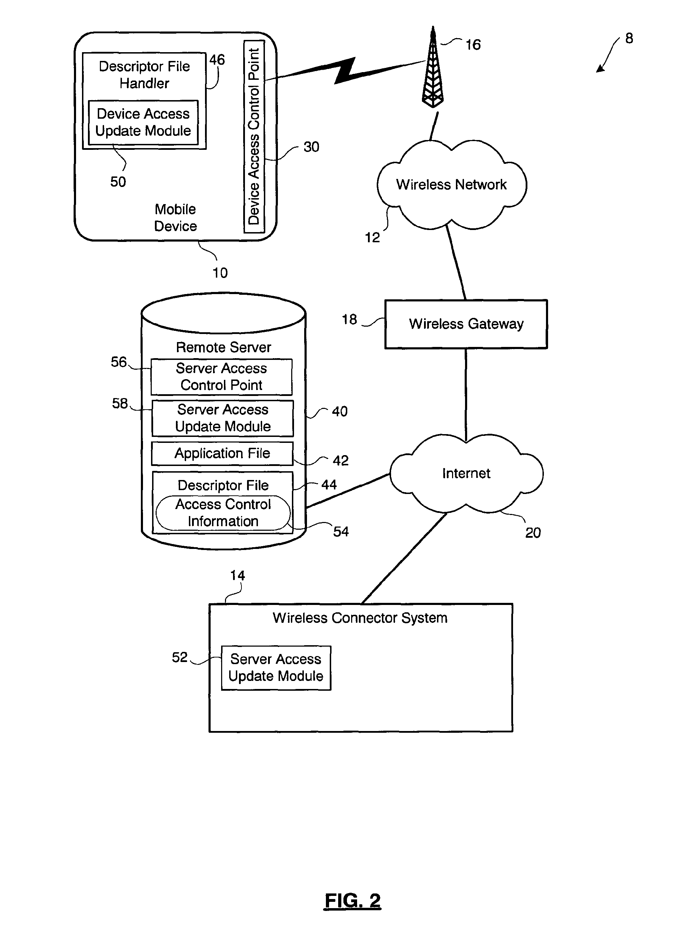

Reference is now made to Figure 2, which shows a block diagram of an alternative embodiment of the mobile device communications system 8. In the embodiment shown in Figure 2, the wireless gateway 18 is coupled to the wireless connector system 14 through the Internet 20. In this embodiment, the mobile device 10 has direct access to the Internet 20 without going through the wireless connector system 14.

Referring now to Figures 1 and 2, the mobile device 10 includes a device access control point 30. The device access control point 30, which may be referred to as a "firewall", includes a set of device access rules for determining whether communications are authorized to be sent by or received by the mobile device 10. The device access control point 30 is intended to prevent unauthorized or unreliable sources from transmitting to the mobile device 10, and to prevent the mobile device from transmitting to unauthorized or unreliable remote sites. This is, partly, to prevent the receipt of viruses and other destructive communications and to prevent the disclosure of confidential or sensitive information. Access to the mobile device 10 may also be restricted so as to prevent other attacks and security problems. The device access rules typically prevent the receipt or transmission of data packets from or to remote sites over the Internet 20 that may be deemed questionable or unreliable.

The device access rules for the device access control point 30 may block access to communications originating from or intended for a particular IP address, or they may grant access to communications originating from or intended for a particular IP address and block all others. Other communications may be blocked by the device access rules based upon their type or based upon their content. For example, certain types of files, such as executables, may be deemed to be a security risk. The device access rules may be configured to seek user confirmation to accept communications from a questionable source. In some embodiments, when a communication is received from an IP address that the device access rules deem questionable or unverified, then the user may be asked whether or not they wish to accept the communication. Many users will decline since they are unfamiliar with the source of the communication.

The wireless connector system 14 in the embodiment shown in Figure 1 similarly includes a server access control point 32. The server access control point 32 acts as a firewall for communications received by the wireless connector system 14 from the Internet 20 intended for transmission to the mobile device 10. The server access control point 32 includes a set of server access rules that govern whether or not communications received from the Internet 20 are granted access or are blocked. The server access rules may include global rules applicable to communications intended for any mobile device 10 in the system 8, and they may include specific rules related to a particular mobile device 10.

A remote server 40 is connected to the Internet 20. In one embodiment, shown in Figure 2, the remote server 40 may include a remote server access control point 56. The remote server access control point 56 is a firewall for communications received by or sent by the remote server 40.

The remote server 40 may contain an application file 42 and a corresponding descriptor file 44. The application file 42 is available for download over the Internet 20 from the remote server 40 to a user terminal so as to configure and install an application at the user terminal. When a user at a user terminal connected to the Internet 20 determines to download and install the application, the user terminal first receives the descriptor file 44. The descriptor file 44 contains information regarding the application and the operating requirements of the user terminal to successfully install and operate the application. The descriptor file 44 may, for example, specify particular versions of operating systems, platforms, or related programs that are necessary for the application to operate properly. The descriptor file 44 may also specify the memory and processor requirements associated with the application, and may contain a link to, or an address for, the application file 42.

In one embodiment, based upon the descriptor file 44 the user terminal determines if it meets the system requirements. The user terminal may open a dialogue window to notify the user if any system requirements are not met or to ask the user whether or not to continue with the downloading and installation of the application. The dialog window may also ask the user whether to accept communications from/to remote resources, or to warn the user that communication with those remote resources may be required for the application to operate correctly. If the user agrees to continue with the installation, then the user terminal downloads the application file 42 based upon the address information contained in the descriptor file 44. The application file 42 is then installed on the user terminal.

By way of example, applications developed using the Java programming language include a Java Archive (JAR) file and a Java Application Descriptor (JAD) file. The JAD file is an extensible text file with a number of name:value fields specifying certain system parameters or requirements related to the application, which can be installed using the JAR file.

Referring still to Figures 1 and 2, a user of the mobile device 10 may locate the remote server 40 and choose to download the descriptor file 44 in order to have an application installed on the mobile device 10. The mobile device 10 includes a descriptor file handler 46 for handing the received descriptor file 44. The descriptor file handler 46 determines whether or not the system requirements specified in the descriptor file 44 are met by the mobile device 10, seeks user confirmation of the download and installation, if necessary, and triggers the downloading of the application file 42 from the remote server 40.

Once installed and operating, the application may require access to resources from the Internet 20. These resources may be located at the remote server 40 or at a second server 48. Communications to or from the remote server 40 or the second server 48 may be blocked at the device access control point 30 or at the server access control points 32 or 56 unless the respective access rules are properly configured to permit communications between the mobile device 10 and the remote server 40 and/or the second server 48.

In accordance with one embodiment of the present invention, the descriptor file 44 includes access control information 54. The access control information 54 may include information regarding the remote resources that the application requires so as to ensure that access to these resources is not blocked by firewalls. In one embodiment, where the descriptor file 44 comprises a JAD file, the access control information 54 includes textual access control information, such an authorized IP address, domain, port, or other identifier, to which access should be granted by the device access control point 30 and the server access control point 32. In one embodiment, the access control information 54 in a JAD file may take the following form:
Server-Access: http://DailyQuotes.traders.com:8080
Server-Access: http://DailyTrade.traders.com:8080

In another embodiment, the access control information 54 is stored directly in the application file 42. In yet another embodiment, the access control information 54 is stored in a separate file unrelated to the descriptor file 44. In the latter embodiment, it is contemplated that the separate file with the access control information 54 would be forwarded to the mobile device 10 after successful installation of the application.

The access control information 54 allows the mobile device 10 to update its device access rules to ensure the application is able to receive communication from the resources it requires, such as the remote server 40 and/or the second server 48.

The mobile device 10 includes a device access update module 50. The device access update module 50 sets or reconfigures the device access control point 30 based upon the access control information 54 in the descriptor file 44. In particular, the device access update module 50 modifies existing device access rules or establishes new device access rules in accordance with the access control information 54. For example, if the access control information 54 indicated that a particular resource, having a particular address, was needed by the application, then the device access update module 50 may configure the device access rules to ensure that communications from the particular resource are permitted.

In one embodiment, the device access update module 50 is resident on the mobile device 10 as a part of the descriptor file handler 46. In another embodiment, the device access update module 50 is provided through code in the application file 42, such that when the application is downloaded and installed the device access update module 50 is invoked.

The device access update module 50 may trigger the changes to the device access rules once the user has confirmed that he or she wishes to download the application file 42 and install the application. It may alternatively trigger the changes once the application has been successfully installed on the mobile device 10. Accordingly, the user or an administrator need not modify the device access rules manually. The mobile device 10 automatically reconfigures its device access control point 30 to accommodate the new application based upon the access control information 54 for the application.

It will be understood that certain authorization and certification processes may accompany an embodiment of the present invention to ensure that access control point rules are not altered by an authorized source. The mobile device 10, the wireless connector system 14, and the remote server 40 establish a trust relationship prior to permitting the alteration of access control rules. This trust relationship may be established using standard cryptographic techniques, such as public key encryption and digital signatures.

In one embodiment shown in Figure 1, the wireless connector system 14 includes a server access update module 52. The server access update module 52 configures the server access control point 32 to permit communications from remote resources, such as the remote server 40 and/or second server 48, to the mobile device 10. In particular, the server access update module 52 modifies or updates the server access rules based upon the access control information 54. The server access update module 52 may obtain the access control information 54 in a variety of ways. In one embodiment, where the access control information 54 is included in the descriptor file 44, the server access update module 52 may read the access control information 54 when the descriptor file 44 is downloaded to the mobile device 10 through the wireless connector system 14. In another embodiment, the descriptor file handler 46 on the mobile device 10 reads the access control information 54 and sends a message to the server access update module 52 that includes the access control information 54. In yet another embodiment, the remote server 40 may send the server access update module 52 a message containing the access control information 54 once the mobile device 10 installs the application. Those of ordinary skill in the art will appreciate that there are a variety of methods for communicating the access control information 54 to the server access update module 52.

In another embodiment, as shown in Figure 2, the remote server 40 includes a remote server access update module 58 for altering the access control rules for the remote server access control point 56. As with the above-described server access update module 52, there are a variety of methods of ensuring that the remotes server access update module 58 is provided with the access control information 54 at the appropriate time. In one embodiment, the mobile device 10 sends a message to the remote server 40 to indicate that the application has been successfully installed, and in response the remote server 40 invokes the remote server access update module 58 and provides it with the access control information 54.

In the context of the system 8, there are at least two download scenarios. In one scenario, the user of the mobile device 10 initiates the downloading of an application to the mobile device 10. This may be termed a "pull" event. A "push" event is the second scenario, in which an administrator may initiate the downloading of an application to the mobile device 10 without user involvement. The administrator may be the administrator of the wireless connector system 14. It will be appreciated that in the "push" event, the descriptor file 44 is often not sent to the mobile device 10. In the case of the "push event" the application file is pushed out to the mobile device 10 for installation and the access control information 54 may be sent prior to the application file 42, embedded in the application file 42, or afterwards in a separate control message. It will also be appreciated that in the case of a "push" event, appropriate authorizations and certifications should be employed to ensure that applications are not pushed out to device by an unauthorized source.

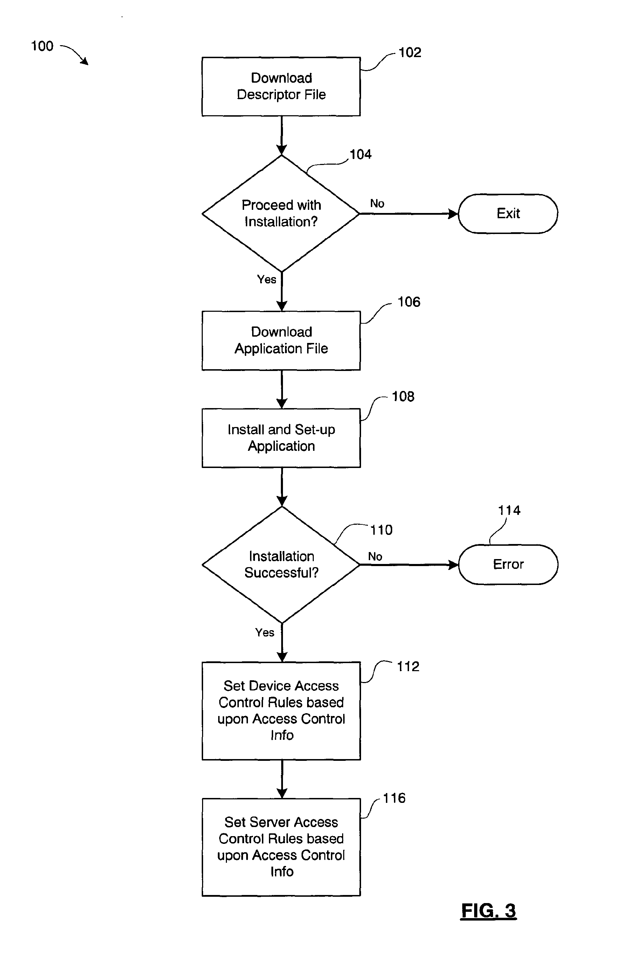

Reference is now made to Figure 3, which shows, in flowchart form, a method 100 of automatically configuring access control for the mobile device communications system 8 (Fig. 1). The method 100 begins with the receipt of a downloaded descriptor file 44 (Fig. 1) in step 102. The descriptor file 44 includes access control information 54 (Fig. 1) regarding the remote resources utilized by the application. Step 102 includes the receipt of the descriptor file 44 by the wireless connector system 14 (Fig. 1) and the forwarding of the descriptor file 46 from the wireless connector system 14 to the mobile device 10 (Fig. 1) over the wireless network 12 (Fig. 1). In one embodiment, the wireless connector system 14 recognizes that it has received a descriptor file, which implies that a user may install a new application on a mobile device, and as a result the wireless connector system 14 invokes the server access update module 52 (Fig. 1) to read the access control information 54 and to await confirmation that the installation of the application is going to proceed or has been completed.

In step 104, the descriptor file handler 46 at the mobile device 10 reads the descriptor file 44 and evaluates whether the application can be downloaded and installed on the mobile device 10 given the system requirements set out in the descriptor file 44. The descriptor file handler 46 may also query the user regarding whether the user wishes to proceed with the downloading and installation of the application. If the user declines, or if the mobile device 10 fails to meet the system requirements, then the method 100 ends. Otherwise, the method 100 proceeds to step 106.

In step 106, the descriptor file handler 46 downloads the application file 42 to the mobile device 10. Then, in step 108, the application is installed and set-up on the mobile device 10 based upon the application file 42.

Following installation, the method 100 proceeds to step 110, wherein an evaluation is made as to whether or not the installation and set-up was successful. If not, then in step 114 an error message or other notification is generated. If the installation has occurred successfully, then in step 112 the descriptor file handler 46, and more particularly the device access update module 50 (Fig. 1), modifies the device access rules in accordance with the access control information 54 from the descriptor file 46. Similarly, in step 116, the server access update module 52 modifies the server access rules in accordance with the access control information 54 from the descriptor file 46. In one embodiment, the device access update module 50 sends a message to the server access update module 52 to confirm that the application has been installed, and in response the server access update module 52 implements the changes to the server access rules.

It will be understood that the updates to the device access rules and the server access rules by the access update modules 50, 52 may occur at other times. For example, the update may occur once the user or administrator has confirmed the downloading of the application file 42 will proceed, instead of waiting until the installation is complete. In some embodiments, the update may occur prior to downloading the application file 42, as described below.

There are at least two other scenarios in which the device and server access rules may be changed. The first is as a result of a modification to an existing application. For example, the address of a database or other network resource used by the application may change. Accordingly, a change may be required to be made to the access rules to ensure communications to the mobile device 10 from this new address are permitted. In these circumstances, a message may be sent to the mobile device 10. The message may contain updated access control information 54 including information pertaining to the modification required of the access rules to permit communications from the new address of the network resource. In one embodiment, the message may comprise the descriptor file 44. Because the application need not be installed, the message may, in these circumstances, contain a flag or other setting indicating that downloading or installation of the application file 42 is not to occur and that the change to the access rules may be implemented by the device access update module 50 and the server access update module 52 immediately. Accordingly, the device access update module 50 and the server access update module 52 update the device access rules and the server access rules, respectively, based upon the access control information 54 at the time the update message is received.

The second scenario may involve the removal of an application. For example, the administrator or other third party may elect to revoke the user's ability to utilize the application. Accordingly, the administrator may send a removal message having a flag or other setting for triggering the initiation of an uninstall process. Alternatively, the message may trigger the download of a new application file 42 that operates to remove the previously installed application. Howsoever the removal or disablement of the application is facilitated, the message pushed out to the mobile device 10 includes access control information 54 for modifying the device and server access rules to reflect the fact that the application will no longer require access to the remote server 40 and/or the second server 48. Therefore, the device access update module 50 and the server access update module 52 modify the device access rules and the server access rules, respectively, to implement the changes; in many cases, essentially undoing the changes to the access rules that were previously made when the application was installed. As described above, the update modules 50, 52 may be triggered to implement the changes upon receipt of the message or at any other appropriate time.

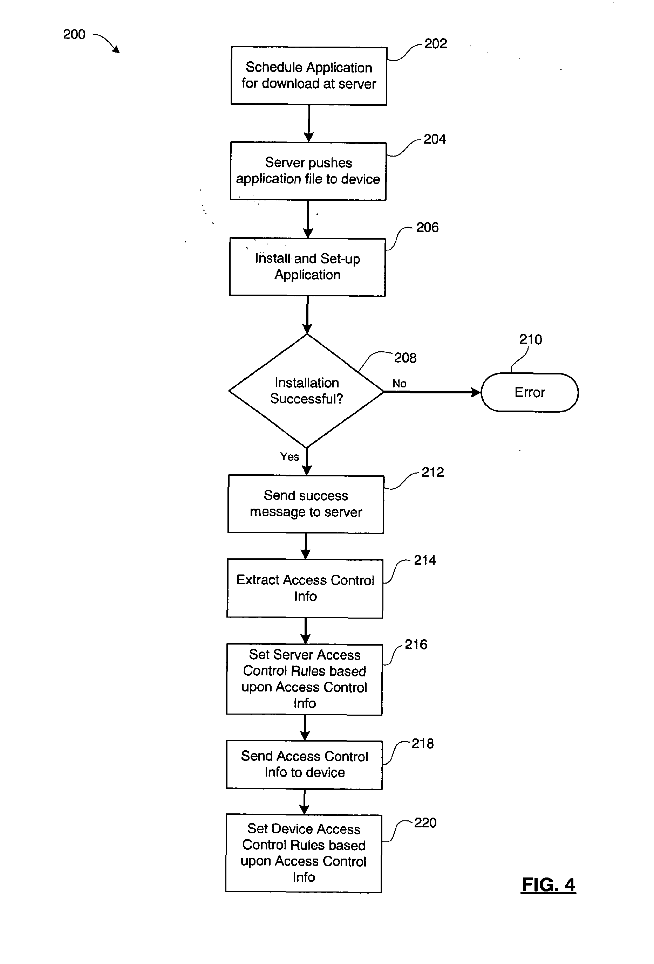

Reference is now made to Figure 4, which shows, in flowchart form, a method 200 of automatically configuring access control for the mobile device communications system 8 (Fig. 1), in a "push" case. The method 200 begins in step 202 where the application is scheduled for distribution to one or more mobile devices 10. In step 204, the remote server 40 pushes the application file 42 out to the mobile device 10. In step 206, the mobile device 10 installs the application.

An assessment is made as to whether or not the installation was successful in step 208 and, if not, then an error message is generated in step 210. If installation was successful, then the method 200 proceeds to step 212 where a message is sent to the remote server 40 to indicate that installation was successful. If the application file 42 had access control information 54 embedded within it, then this information is extracted and included in the message to the remote server 40.

At the remote server 40, in step 214 the remote server access update module 58 extracts the access control information 54 from the message, if there any, or extracts the access control information 54 from a file or object stored locally and associated with the application file 42. In step 216, the remote server access update module 58 configures the remote server access control rules based upon the access control information 54.

Once the remote server 40 has configured its remote server access control point 56, then in step 218 it sends a message to the mobile device 10 that may include the access control information 54. It will be understood that the message need not include the access control information 54 if this information was embedded in the application file 42 that was originally distributed to the mobile device 10. In step 220, upon receipt of the message the device access update module 50 configures the device access control rules based upon the access control information 54.

The programming of the above-described device access update module 50 and server access update module 52 will be within the understanding of one of ordinary skill in the art of computer programming, having regard to the foregoing description. The present invention is not limited to the implementation of the access update modules 50, 52 in any particular computer programming language.

Although the above embodiments describe the present invention in the context of mobile devices using a wireless network, those of ordinary skill in the art will appreciate that it is not so limited. In some embodiments, the mobile devices may be user terminals, such as desktop or laptop computers, and may be coupled to a wireless connector system over a wired or wireless network. The network may include a LAN, WAN, MAN, or other network. In some embodiments, access control points may be provided at each device or terminal. In other embodiments, the only access control point may be at the wireless connector system to block communications incoming from the Internet. Various other configurations may be implemented in accordance with the present invention provided there is at least one access control point and a corresponding access update module for dynamically configuring the access rules for the access control point based upon a received descriptor file.

Those of ordinary skill in the art will appreciate that references to a "module", such as the server access update module 52 or the device access update module 54 are intended to encompass wide variety of possible programming mechanisms including objects, routines, components, constraint-based systems, declarative systems, etc.

The present invention may be embodied in other specific forms without departing from the scope of the claims. Therefore, the above discussed embodiments are considered to be illustrative and not restrictive, the scope of the invention being indicated by the appended claims rather than the foregoing description, and all changes which come within the meaning and range of equivalency of the claims are therefore intended to be embraced therein.

## Claims

1. A method of automatically configuring a server access control point (32) located at a wireless connector system associated with a user device (10), allowing or blocking transmissions between remote network resources (40, 48) and a new downloaded application on the user device (10) based upon server access control rules, comprising:
receiving and reading, at a server access update module (52), access control information (54) regarding remote network resources utilized by the new application;
downloading the new application for installation on the user device (10), wherein the new application is configured to access the remote network resources during operation;
installing and setting up the new application on the user device;
modifying, at the server access update module (52), the server access control rules based upon said access control information (54) in order to permit communications between the new application and the remote network resources, said modifying occurring after it has been confirmed that installation of the application is complete;
wherein said modifying further comprises modifying server access control rules in accordance with the access control information (54), wherein the server access control rules govern whether or not communications received from the Internet (20) are granted access or are blocked, and said modifying server access control rules further comprises the user device (10) sending a message to the server access update module (52) to confirm that the application has been installed, and
responsive thereto the server access update module (52) implements the changes to the server access control rules,
and wherein said step of downloading comprises downloading an application file (42) to the user device and said access control information (54) stored within a descriptor file (44) associated with said application file (42),
and wherein said step of receiving and reading comprises downloading said descriptor file.

2. The method claimed in claim 1, wherein the user device (10) comprises a mobile device and wherein additionally a device access control point (30) is located at said mobile device, the device access control point (30) allowing or blocking transmissions between remote network resources (40, 48) and a new downloaded application on the device (10) based upon device access control rules, and wherein said step of setting comprises setting said device access control rules based upon said access control information.

3. The method claimed in claim 1, wherein the user device (10) comprises a mobile device.

4. The method claimed in any of claims 1 to 3, wherein the application comprises a Java-implemented application, and wherein said descriptor file (44) is a Java Descriptor File.

5. The method claimed in any one of the preceding claims, wherein said access control information (54) comprises an identifier corresponding to the remote network resources (48).

6. A computer program product having a computer-readable medium tangibly embodying computer executable instructions for automatically configuring a server access control point (32) located at a wireless connector system associated with a user device (10), the server access control point (32) allowing or blocking transmissions between remote network resources (40, 48) and a new downloaded application on the user device (10) based upon server access control rules, and wherein the new application is configured to access the remote network resources during operation, comprising:
computer executable instructions for implementing the method of any preceding claim.

7. The computer program product claimed in claim 6, wherein the application file (42) comprises computer-executable instructions for installing a device access update module (50) on the mobile device.

8. The computer program product claimed in claim 6 or claim 7, wherein said access control information (54) comprises an identifier corresponding to said remote network resources (48).

9. An access control system for automatically configuring a server access control point (32) located at a wireless connector system associated with a user device (10), configured to allow or block transmissions between remote network resources (40, 48) and a new downloaded application on the user device (10) based upon server access control rules, wherein the automatic configuration of the server access control point occurs in connection with downloading and installing the new application on the user device, and wherein the new application is configured to access the remote network resources during operation, the system comprising:
means for receiving and reading, at a server access update module (52), access control information (54) regarding remote network resources utilized by the new application;
means for downloading the new application for installation on the user device (10), wherein the new application is configured to access the remote network resources during operation;
means for installing and setting up the new application on the user device;
means for modifying, at the server access update module (52), the server access control rules based upon said access control information (54) in order to permit communications between the new application and the remote network resources,
said modifying occurring after it has been confirmed that installation of the application is complete;
wherein said modifying further comprises modifying server access control rules in accordance with the access control information (54), wherein the server access control rules govern whether or not communications received from the Internet (20) are granted access or are blocked, and said modifying server access control rules further comprises the user device (10) sending a message to a server access update module (52) to confirm that the application has been installed, and
responsive thereto the server access update module (52) implements the changes to the server access control rules,
and wherein said step of downloading comprises downloading an application file (42) to the user device and said access control information (54) is stored within a descriptor file (44) associated with said application file (42), and wherein said step of receiving and reading comprises downloading said descriptor file.

10. A user device (10) arranged to be used as the user device (10) in the method of any of claims 1 to 5.

11. The user device claimed in claim 10, wherein a processor of the user device (10) is configured to execute program code embodying a device access update module (50) embodying said means for receiving and means for setting, on or after downloading of the application to the device.

## Patentansprüche

1. Verfahren zum automatischen Konfigurieren eines Serverzugangssteuerpunkts (32), der sich an einem drahtlosen Verbindersystem befindet, das mit einer Benutzervorrichtung (10) assoziiert ist, der Übertragungen zwischen entfernten Netzwerkressourcen (40, 48) und einer neuen heruntergeladenen Anwendung auf der Benutzervorrichtung (10) basierend auf Serverzugangssteuerregeln zulässt oder blockiert, das aufweist:
Empfangen und Lesen, an einem Serverzugangsaktualisierungsmodul (52), von Zugangssteuerinformation (54) hinsichtlich entfernter Netzwerkressourcen, die von der neuen Anwendung verwendet werden;
Herunterladen der neuen Anwendung zur Installation auf der Benutzervorrichtung (10), wobei die neue Anwendung konfiguriert ist zum Zugreifen auf die entfernten Netzwerkressourcen während eines Betriebs;
Installieren und Einrichten der neuen Anwendung auf der Benutzervorrichtung;
Modifizieren, an dem Serverzugangsaktualisierungsmodul (52), der Serverzugangssteuerregeln basierend auf der Zugangssteuerinformation (54), um Kommunikationen zwischen der neuen Anwendung und den entfernten Netzwerkressourcen zuzulassen, wobei das Modifizieren stattfindet, nachdem bestätigt wurde, dass eine Installation der Anwendung abgeschlossen ist;
wobei das Modifizieren weiter aufweist ein Modifizieren von Serverzugangssteuerregeln in Übereinstimmung mit der Zugangssteuerinformation (54), wobei die Serverzugangssteuerregeln regeln, ob Kommunikationen, die von dem Internet (20) empfangen werden, einen Zugang erhalten oder geblockt werden oder nicht, und das Modifizieren von Serverzugangssteuerregeln weiter aufweist, dass die Benutzervorrichtung (10) eine Nachricht an das Serverzugangsaktualisierungsmodul (52) sendet, um zu bestätigen, dass die Anwendung installiert wurde, und in Reaktion darauf, das Serverzugangsaktualisierungsmodul (52) die Änderungen an den Serverzugangssteuerregeln implementiert,
und wobei der Schritt des Herunterladens aufweist ein Herunterladen einer Anwendungsdatei (42) auf die Benutzervorrichtung und der Zugangssteuerinformation (54), die in einer Deskriptor-Datei (44) gespeichert ist, die mit der Anwendungsdatei (42) assoziiert ist,
und wobei der Schritt des Empfangens und Lesens ein Herunterladen der Deskriptor-Datei aufweist.

2. Das Verfahren gemäß Anspruch 1, wobei die Benutzereinrichtung (10) eine mobile Vorrichtung aufweist und wobei sich zusätzlich ein Vorrichtungszugangssteuerpunkt (30) an der mobilen Vorrichtung befindet, wobei der Vorrichtungszugangssteuerpunkt (30) Übertragungen zwischen entfernten Netzwerkressourcen (40, 48) und einer neuen heruntergeladenen Anwendung auf der Vorrichtung (10) basierend auf Vorrichtungszugangssteuerregeln zulässt oder blockiert, und wobei der Schritt des Einrichtens aufweist ein Setzen der Vorrichtungszugangssteuerregeln basierend auf der Zugangssteuerinformation.

3. Das Verfahren gemäß Anspruch 1, wobei die Benutzervorrichtung (10) eine mobile Vorrichtung aufweist.

4. Das Verfahren gemäß einem der Ansprüche 1 bis 3, wobei die Anwendung eine Java-implementierte Anwendung aufweist, und wobei die Deskriptor-Datei (44) eine Java-Deskriptor-Datei ist.

5. Das Verfahren gemäß einem der vorhergehenden Ansprüche, wobei die Zugangssteuerinformation (54) einen Identifizierer aufweist, der den entfernten Netzwerkressourcen (48) entspricht.

6. Ein Computerprogrammprodukt mit einem computerlesbaren Medium, das materiell computerausführbare Anweisungen umfasst zum automatischen Konfigurieren eines Serverzugangssteuerpunkts (32), der sich an einem drahtlosen Verbindersystem befindet, das mit einer Benutzervorrichtung (10) assoziiert ist, wobei der Serverzugangssteuerpunkt (32) Übertragungen zwischen entfernten Netzwerkressourcen (40, 48) und einer neuen heruntergeladenen Anwendung auf der Benutzervorrichtung (10) basierend auf Serverzugangssteuerregeln zulässt oder blockiert, und wobei die neue Anwendung konfiguriert ist zum Zugreifen auf die entfernten Netzwerkressourcen während eines Betriebs, aufweisend:
computerausführbare Anweisungen zum Implementieren des Verfahrens gemäß einem vorhergehenden Anspruch.

7. Das Computerprogrammprodukt gemäß Anspruch 6, wobei die Anwendungsdatei (42) computerausführbare Anweisungen aufweist zum Installieren eines Vorrichtungszugangsaktualisierungsmoduls (50) auf der mobilen Vorrichtung.

8. Das Computerprogrammprodukt gemäß Anspruch 6 oder Anspruch 7, wobei die Zugangssteuerinformation (54) einen Identifizierer aufweist, der den entfernten Netzwerkressourcen (48) entspricht.

9. Ein Zugangssteuersystem zum automatischen Konfigurieren eines Serverzugangssteuerpunkts (32), der sich an einem drahtlosen Verbindersystem befindet, das mit einer Benutzervorrichtung (10) assoziiert ist, der konfiguriert ist zum Zulassen oder Blockieren von Übertragungen zwischen entfernten Netzwerkressourcen (40, 48) und einer neuen heruntergeladenen Anwendung auf der Benutzervorrichtung (10) basierend auf Serverzugangssteuerregeln, wobei die automatische Konfiguration des Serverzugangssteuerpunkts in Verbindung mit einem Herunterladen und Installieren der neuen Anwendung auf der Benutzervorrichtung stattfindet, und wobei die neue Anwendung konfiguriert ist zum Zugreifen auf die entfernten Netzwerkressourcen während eines Betriebs, wobei das System aufweist:
Mittel zum Empfangen und Lesen, an einem
Serverzugangsaktualisierungsmodul (52), von Zugangssteuerinformation (54) hinsichtlich entfernter Netzwerkressourcen, die von der neuen Anwendung verwendet werden;
Mittel zum Herunterladen der neuen Anwendung zur Installation auf der Benutzervorrichtung (10), wobei die neue Anwendung konfiguriert ist zum Zugreifen auf die entfernten Netzwerkressourcen während eines Betriebs; Mittel zum Installieren und Einrichten der neuen Anwendung auf der Benutzervorrichtung;
Mittel zum Modifizieren, an dem Serverzugangsaktualisierungsmodul (52), der Serverzugangssteuerregeln basierend auf der Zugangssteuerinformation (54), um Kommunikationen zwischen der neuen Anwendung und den entfernten Netzwerkressourcen zuzulassen, wobei das Modifizieren stattfindet, nachdem bestätigt wurde, dass eine Installation der Anwendung abgeschlossen ist;
wobei das Modifizieren weiter aufweist ein Modifizieren von Serverzugangssteuerregeln in Übereinstimmung mit der Zugangssteuerinformation (54), wobei die Serverzugangssteuerregeln regeln, ob Kommunikationen, die von dem Internet (20) empfangen werden, einen Zugang erhalten oder geblockt werden oder nicht, und das Modifizieren von Serverzugangssteuerregeln weiter aufweist, dass die Benutzervorrichtung (10) eine Nachricht an ein Serverzugangsaktualisierungsmodul (52) sendet, um zu bestätigen, dass die Anwendung installiert wurde, und in Reaktion darauf, das Serverzugangsaktualisierungsmodul (52) die Änderungen an den Serverzugangssteuerregeln implementiert,
und wobei der Schritt des Herunterladens aufweist ein Herunterladen einer Anwendungsdatei (42) auf die Benutzervorrichtung und die Zugangssteuerinformation (54) in einer Deskriptor-Datei (44) gespeichert wird, die mit der Anwendungsdatei (42) assoziiert ist, und wobei der Schritt des Empfangens und Lesens ein Herunterladen der Deskriptor-Datei aufweist.

10. Eine Benutzervorrichtung (10), die ausgebildet ist, als die Benutzervorrichtung (10) in dem Verfahren gemäß einem der Ansprüche 1 bis 5 verwendet zu werden.

11. Die Benutzervorrichtung gemäß Anspruch 10, wobei ein Prozessor der Benutzervorrichtung (10) konfiguriert ist zum Ausführen von Programmcode, der ein Vorrichtungszugangsaktualisierungsmodul (50) umfasst, das die Mittel zum Empfangen und die Mittel zum Einrichten bei oder nach einem Herunterladen der Anwendung auf die Vorrichtung umfasst.

## Revendications

1. Procédé de configuration automatique d'un point de contrôle d'accès à un serveur (32) situé au niveau d'un système de connexion sans fil associé à un dispositif utilisateur (10), permettant ou bloquant des transmissions entre des ressources de réseau distantes (40, 48) et une nouvelle application téléchargée sur le dispositif utilisateur (10) sur la base de règles de contrôle d'accès à un serveur, comprenant le fait :
de recevoir et de lire, au niveau d'un module de mise à jour d'accès à un serveur (52), des informations de contrôle d'accès (54) concernant des ressources de réseau distantes utilisées par la nouvelle application ;
de télécharger la nouvelle application pour l'installation sur le dispositif utilisateur (10), où la nouvelle application est configurée pour accéder aux ressources de réseau distantes pendant le fonctionnement ;
d'installer et de paramétrer la nouvelle application sur le dispositif utilisateur ;
de modifier, au niveau du module de mise à jour d'accès à un serveur (52), les règles de contrôle d'accès à un serveur sur la base desdites informations de contrôle d'accès (54) afin de permettre des communications entre la nouvelle application et les ressources de réseau distantes, ladite modification se produisant après qu'il a été confirmé que l'installation de l'application est terminée ;
dans lequel ladite modification comprend en outre le fait de modifier des règles de contrôle d'accès à un serveur conformément aux informations de contrôle d'accès (54), où les règles de contrôle d'accès à un serveur déterminent si des communications reçues à partir de l'Internet (20) ont accès ou sont bloquées ou non, et ladite modification de règles de contrôle d'accès à un serveur comprend en outre le dispositif utilisateur (10) envoyant un message au module de mise à jour d'accès à un serveur (52) pour confirmer que l'application a été installée, et
en réponse à ceci le module de mise à jour d'accès à un serveur (52) met en oeuvre des modifications aux règles de contrôle d'accès à un serveur,
et où ladite étape de téléchargement comprend le fait de télécharger un fichier d'application (42) sur le dispositif utilisateur et lesdites informations de contrôle d'accès (54) stockées dans un fichier de description (44) associé audit fichier d'application (42),
et où ladite étape de réception et de lecture comprend le fait de télécharger ledit fichier de description.

2. Procédé tel que revendiqué dans la revendication 1, dans lequel le dispositif utilisateur (10) comprend un dispositif mobile et où de plus un point de contrôle d'accès à un dispositif (30) est situé au niveau dudit dispositif mobile, le point de contrôle d'accès à un dispositif (30) permettant ou bloquant des transmissions entre des ressources de réseau distantes (40, 48) et une nouvelle application téléchargée sur le dispositif (10) sur la base de règles de contrôle d'accès à un dispositif, et où ladite étape de réglage comprend le fait de régler lesdites règles de contrôle d'accès à un dispositif sur la base desdites informations de contrôle d'accès.

3. Procédé tel que revendiqué dans la revendication 1, dans lequel le dispositif utilisateur (10) comprend un dispositif mobile.

4. Procédé tel que revendiqué dans l'une des revendications 1 à 3, dans lequel l'application comprend une application exécutée par Java, et où ledit fichier de description (44) est un fichier de description Java.

5. Procédé tel que revendiqué dans l'une quelconque des revendications précédentes, dans lequel lesdites informations de contrôle d'accès (54) comprennent un identifiant correspondant aux ressources de réseau distantes (48).

6. Produit de programme informatique ayant un support lisible par ordinateur incorporant de manière tangible des instructions exécutables par ordinateur pour configurer automatiquement un point de contrôle d'accès à un serveur (32) situé au niveau d'un système de connexion sans fil associé à un dispositif utilisateur (10), le point de contrôle d'accès à un serveur (32) permettant ou bloquant des transmissions entre des ressources de réseau distantes (40, 48) et une nouvelle application téléchargée sur le dispositif utilisateur (10) sur la base de règles de contrôle d'accès à un serveur, et où la nouvelle application est configurée pour accéder aux ressources de réseau distantes pendant le fonctionnement, comprenant :
des instructions exécutables par ordinateur pour mettre en oeuvre le procédé de l'une des revendications précédentes.

7. Produit de programme informatique tel que revendiqué dans la revendication 6, dans lequel le fichier d'application (42) comprend des instructions exécutables par ordinateur pour installer un module de mise à jour d'accès à un dispositif (50) sur le dispositif mobile.

8. Produit de programme informatique tel que revendiqué dans la revendication 6 ou 7, dans lequel lesdites informations de contrôle d'accès (54) comprennent un identifiant correspondant auxdites ressources de réseau distantes (48).

9. Système de contrôle d'accès pour configurer automatiquement un point de contrôle d'accès à un serveur (32) situé au niveau d'un système de connexion sans fil associé à un dispositif utilisateur (10), configuré pour permettre ou bloquer des transmissions entre des ressources de réseau distantes (40, 48) et une nouvelle application téléchargée sur le dispositif utilisateur (10) sur la base de règles de contrôle d'accès à un serveur, où la configuration automatique du point de contrôle d'accès à un serveur se produit en relation avec le téléchargement et l'installation de la nouvelle application sur le dispositif utilisateur, et où la nouvelle application est configurée pour accéder aux ressources de réseau distantes pendant le fonctionnement, le système comprenant :
un moyen pour recevoir et lire, au niveau d'un module de mise à jour d'accès à un serveur (52), des informations de contrôle d'accès (54) concernant des ressources de réseau distantes utilisées par la nouvelle application ;
un moyen pour télécharger la nouvelle application pour l'installation sur le dispositif utilisateur (10), où la nouvelle application est configurée pour accéder aux ressources de réseau distantes pendant le fonctionnement ;
un moyen pour installer et paramétrer la nouvelle application sur le dispositif utilisateur ;
un moyen pour modifier, au niveau du module de mise à jour d'accès à un serveur (52), les règles de contrôle d'accès à un serveur sur la base desdites informations de contrôle d'accès (54) afin de permettre des communications entre la nouvelle application et les ressources de réseau distantes, ladite modification se produisant après qu'il a été a confirmé que l'installation de l'application est terminée ;
dans lequel ladite modification comprend en outre le fait de modifier des règles de contrôle d'accès à un serveur conformément aux informations de contrôle d'accès (54), où les règles de contrôle d'accès à un serveur déterminent si des communications reçues à partir de l'Internet (20) ont accès ou sont bloquées ou non, et ladite modification de règles de contrôle d'accès à un serveur comprend en outre le dispositif utilisateur (10) envoyant un message à un module de mise à jour d'accès à un serveur (52) pour confirmer que l'application a été installée, et en réponse à ceci le module de mise à jour d'accès à un serveur (52) met en oeuvre les modifications aux règles de contrôle d'accès à un serveur,
et où ladite étape de téléchargement comprend le fait de télécharger un fichier d'application (42) sur le dispositif utilisateur et lesdites informations de contrôle d'accès (54) sont stockées dans un fichier de description (44) associé audit fichier d'application (42), et où ladite étape de réception et de lecture comprend le fait de télécharger ledit fichier de description.

10. Dispositif utilisateur (10) agencé pour être utilisé comme étant le dispositif utilisateur (10) dans le procédé de l'une des revendications 1 à 5.

11. Dispositif utilisateur tel que revendiqué dans la revendication 10, dans lequel un processeur du dispositif utilisateur (10) est configuré pour exécuter un code de programme incorporant un module de mise à jour d'accès à un dispositif (50) incorporant ledit moyen de réception et le moyen de réglage, lors du téléchargement de l'application sur le dispositif ou après celui-ci.
